# EUROPÄISCHE PATENTSCHRIFT

(11) **EP 3 987 742 B1**
(45) Veröffentlichungstag und Bekanntmachung des Hinweises auf die Patenterteilung: **14.05.2025**
(21) Anmeldenummer: 20732778.4
(22) Anmeldetag: 03.06.2020
(51) Int. Cl.: H04L 9/40

(54) **FILTER, ANORDNUNG UND BETRIEBSVERFAHREN FÜR EINE ANORDNUNG**
FILTER, ASSEMBLY, AND METHOD FOR OPERATING AN ASSEMBLY
FILTRE, SYSTÈME ET PROCÉDÉ DE FONCTIONNEMENT D'UN SYSTÈME

(30) Priorität: 20.06.2019 DE 102019209009
(43) Veröffentlichungstag der Anmeldung: 27.04.2022
(73) Patentinhaber: Siemens Mobility GmbH, 81739 München (DE)
(72) Erfinder: RENPENNING, Frank, 38118 Braunschweig (DE)
(74) Vertreter: Siemens Patent Attorneys
(86) Internationale Anmeldenummer: PCT/EP2020/065254
(87) Internationale Veröffentlichungsnummer: WO 2020/254106

(56) Entgegenhaltungen:
- EP-A2- 2 706 722
- WO-A1-2018/033318
- US-A1- 2011 173 443

## Beschreibung

Aus der Patentanmeldung WO 2018/033318 A1 ist ein Filter für einen geschützten Betrieb einer sicherheitskritischen Anlage mittels Fernabfrage bekannt.

Die Erfindung betrifft einen Filter mit den Merkmalen des Oberbegriffes des Patentanspruches 1. Es werden auch eine Anordnung und ein Verfahren zum Betreiben einer Anordnung angegeben.

Gattungsgemäße Filter sind aus den Druckschriften US 2011/173443 A1 und EP 2 706 722 A2 bekannt.

Eine zu lösende Aufgabe besteht darin, einen Filter für eine sichere Fernabfrage einer sicherheitskritischen Anlage mit leicht nachweisbaren Eigenschaften anzugeben. Weitere zu lösende Aufgaben bestehen darin, eine Anordnung mit einem solchen Filter sowie ein Verfahren zum Betreiben einer solchen Anordnung anzugeben.

Gelöst wird diese Aufgabe durch einen Filter mit den Merkmalen des Anspruches 1. Vorteilhafte Ausführungsformen sind in den Unteransprüchen 2 bis 8 angegeben.

Der erfindungsgemäße Filter umfasst eine Eingangsschnittstelle zum Empfangen eines Befehls auf Basis eines ersten Protokolls und eine Ausgangsschnittstelle zur Ausgabe eines Befehls. Über die Eingangsschnittstelle wird dem Filter also von außen ein Befehl zugeführt. Über die Eingangsschnittstelle ist beispielsweise ein Datentransfer mit einer Fernabfrageeinheit ermöglicht. Beispielsweise handelt es sich bei der Eingangsschnittstelle um eine serielle Schnittstelle, wie eine USB-Schnittstelle oder eine Ethernet-Schnittstelle, zum Empfangen eines Befehls auf Basis eines entsprechenden Protokolls. Unter einem Protokoll wird hier ein Kommunikationsprotokoll verstanden. Das Protokoll wird durch die Hardware und/oder Software des Filters vorgegeben. Bei den Befehlen handelt es sich insbesondere um digitale Kommandos, die von der Anlage, gegebenenfalls in abgewandelte Form, verstanden werden.

Über die Ausgangsschnittstelle ist beispielsweise eine Kommunikation mit einer sicherheitskritischen Anlage ermöglicht. Über die Ausgangsschnittstelle gibt der Filter also einen Befehl nach außen. Bei der Ausgangsschnittstelle handelt es sich beispielsweise um eine serielle Schnittstelle, wie eine USB-Schnittstelle oder eine Ethernet-Schnittstelle, zur Ausgabe eines Befehls auf Basis eines entsprechenden Protokolls.

Der erfindungsgemäße Filter umfasst ein erstes Schnittstellenmodul und ein zweites Schnittstellenmodul. Bei den Schnittstellenmodulen handelt es sich bevorzugt um einfach aufgebaute Logikbausteine. Beispielsweise sind die Schnittstellenmodule Mikrocontroller oder FPGAs. Bevorzugt umfasst der Filter neben den beiden Schnittstellenmodulen keine weiteren Logikbausteine, insbesondere keine weiteren Mikrocontroller oder Computer oder FPGAs.

Das erste Schnittstellenmodul ist signaltechnisch mit der Eingangsschnittstelle und mit dem zweiten Schnittstellenmodul verbunden. Das zweite Schnittstellenmodul ist signaltechnisch mit der Ausgangsschnittstelle und dem ersten Schnittstellenmodul verbunden. Insbesondere ist die Eingangsschnittstelle im bestimmungsgemäßen Betrieb ausschließlich mit dem ersten Schnittstellenmodul sowie mit der Fernabfrageeinheit signaltechnisch verbunden. Das erste Schnittstellenmodul ist bevorzugt ausschließlich mit der Eingangsschnittstelle und mit dem zweiten Schnittstellenmodul signaltechnisch verbunden. Das zweite Schnittstellenmodul ist bevorzugt ausschließlich mit dem ersten Schnittstellenmodul und mit der Ausgangsschnittstelle verbunden. Die Ausgangsschnittstelle ist im Betrieb bevorzugt ausschließlich mit dem zweiten Schnittstellenmodul und einer technischen Anlage verbunden.

Im bestimmungsgemäßen Betrieb gelangt ein Befehl von der Eingangsschnittstelle zur Ausgangsschnittstelle bevorzugt nur, indem der Befehl das erste Schnittstellenmodul und das zweite Schnittstellenmodul durchläuft.

Das erste Schnittstellenmodul ist dazu eingerichtet, den über die Eingangsschnittstelle empfangenen Befehl unter Protokollbruch an das zweite Schnittstellenmodul weiterzuleiten. Das heißt, im Betrieb nimmt das erste Schnittstellenmodul den über die Eingangsschnittstelle empfangenen Befehl, verändert das Kommunikationsprotokoll des Befehls und gibt daraufhin den Befehl an das zweite Schnittstellenmodul weiter. Anders ausgedrückt ändert das erste Schnittstellenmodul das Protokoll von dem ersten Protokoll auf ein vom ersten Protokoll verschiedenes zweites Protokoll.

Der Protokollbruch in dem ersten Schnittstellenmodul wird bevorzugt sowohl durch die Hardware des ersten Schnittstellenmoduls als auch durch eine auf dem ersten Schnittstellenmodul gespeicherte Software bewirkt.

Das zweite Schnittstellenmodul ist dazu eingerichtet, nur solche Teile des von dem ersten Schnittstellenmodul kommenden Befehls an die Ausgangsschnittstelle weiterzuleiten, die in dem zweiten Schnittstellenmodul gespeichert beziehungsweise hinterlegt sind. Insbesondere umfasst das zweite Schnittstellenmodul einen internen Speicher, auf dem zugelassene Befehle oder Befehlsteile hinterlegt sind. Das zweite Schnittstellenmodul vergleicht zum Beispiel den vom ersten Schnittstellenmodul kommenden Befehl mit den hinterlegten Befehlen oder Befehlsteilen und leitet entsprechend nur einen bekannten Befehl oder bekannte Teile des Befehls weiter.

Das zweite Schnittstellenmodul leitet den vom ersten Schnittstellenmodul kommenden Befehl oder Befehlsteil entweder ohne Protokollbruch weiter oder das zweite Schnittstellenmodul nimmt einen Protokollbruch an dem Befehl oder Befehlsteil vor. Beispielsweise ändert das zweite Schnittstellenmodul das Protokoll vom zweiten Protokoll zurück auf das erste Protokoll oder auf ein vom ersten und zweiten Protokoll verschiedenes drittes Protokoll. Ein etwaiger Protokollbruch durch das zweite Schnittstellenmodul erfolgt bevorzugt sowohl durch die Hardware des zweiten Schnittstellenmoduls als auch durch die auf dem zweiten Schnittstellenmodul gespeicherte Software.

Das zweite Schnittstellenmodul umfasst eine Software. Die Software des zweiten Schnittstellenmoduls ist über die Eingangsschnittstelle nicht veränderbar. Das heißt, über die Eingangsschnittstelle kann die Software des zweiten Schnittstellenmoduls nicht umprogrammiert werden. Die Software ist beispielsweise auf einem internen Speicher des zweiten Schnittstellenmoduls gespeichert. Über die Eingangsschnittstelle ist beispielsweise kein Zugriff auf den internen Speicher ermöglicht. Alternativ oder zusätzlich ist die Unveränderbarkeit der Software über die Eingangsschnittstelle dadurch gegeben, dass die Befehlsweitergabe von dem ersten Schnittstellenmodul auf das zweite Schnittstellenmodul ohne standardisiertes Protokoll verläuft, so dass eine Umprogrammierung über die Eingangsschnittstelle und das erste Schnittstellenmodul nicht möglich ist.

Es kann das zweite Schnittstellenmodul eine Programmierschnittstelle zur Umprogrammierung des zweiten Schnittstellenmoduls aufweisen, die dann aber nicht signaltechnisch mit dem ersten Schnittstellenmodul und/oder der Eingangsschnittstelle verbunden ist. Die Programmierschnittstelle ist bevorzugt durch einen Hardware-Mechanismus abschaltbar.

Die Software des zweiten Schnittstellenmoduls ist insbesondere dazu eingerichtet, die bekannten Teile eines Befehls zu ermitteln und weiterzuleiten.

Der erfindungsgemäße Filter umfasst also eine Eingangsschnittstelle zum Empfangen eines Befehls auf Basis eines ersten Protokolls, eine Ausgangsschnittstelle zur Ausgabe eines Befehls, ein erstes Schnittstellenmodul und ein zweites Schnittstellenmodul. Das erste Schnittstellenmodul ist signaltechnisch mit der Eingangsschnittstelle und dem zweiten Schnittstellenmodul verbunden. Das zweite Schnittstellenmodul ist signaltechnisch mit der Ausgangsschnittstelle und dem ersten Schnittstellenmodul verbunden. Das erste Schnittstellenmodul ist dazu eingerichtet, den von der Eingangsschnittstelle empfangenen Befehl unter Protokollbruch an das zweite Schnittstellenmodul weiterzuleiten. Das zweite Schnittstellenmodul ist dazu eingerichtet, nur solche Teile des von dem ersten Schnittstellenmodul kommenden Befehls an die Ausgangsschnittstelle weiterzuleiten, die in dem zweiten Schnittstellenmodul gespeichert sind. Eine Software des zweiten Schnittstellenmoduls ist über die Eingangsschnittstelle nicht veränderbar.

Der vorliegenden Erfindung liegt unter anderem folgende Erkenntnis zugrunde: Für die Wartung sicherheitskritischer, technischer Anlagen steigt der Bedarf, diese über eine Fernverbindung durchführen zu können. Die zu wartende Anlage befindet sich allerdings unter Umständen in einer besonderen Sicherheitszone, auf die kein direkter Zugriff möglich ist (zum Beispiel Kategorie 2 Netzwerk nach EN 50159). Eine Kerneigenschaft dieser Sicherheitszone ist, dass sie gegen Manipulation geschützt sein muss. Auch bei Verbindungen der Anlage nach außen, zum Beispiel für eine Fernwartung oder Fernabfrage, muss eine denkbare Manipulation verlässlich/sicher verhindert werden (Perimeterschutz). Darüber hinaus sollte gewährleistet werden, dass über eine solche Verbindung bestimmte Elemente nicht übertragen werden können, wie zum Beispiel sicherheitsrelevante Nachrichten. Es sollte also
- ein Schutz vor Manipulation sichergestellt werden und
- Informationen mit bestimmten Eigenschaften nicht in die Anlage gesendet werden.

Diese Eigenschaften sollten nachweisbar sein. Der entsprechende Nachweis sollte für Dritte (Betreiber, Gutachter, Aufsichtsbehörden) einfach verstehbar sein.

Diese technischen Aufgaben können einerseits durch den Einsatz verschiedener, zusammenwirkender IT-SicherheitsMaßnahmen gelöst werden. Dazu werden zum Beispiel mehrstufige Router oder Gateways mit Firewalls eingesetzt. Über die Firewall werden nur die zulässigen Nachrichten zwischen den Datennetzen übertragen - alle anderen Daten werden geblockt. Dieses Verhalten darf auch durch Ausfälle nicht korrumpiert werden. Entweder wird die Datenübertragung bei Ausfällen unterbrochen und/oder Ausfälle wirken sich durch die Mehrstufigkeit nicht unmittelbar aus und werden durch Prüfmechanismen erkannt (Defense in Depth).

Während im sicherheitskritischen Bereich ein dedizierter Sicherheitsnachweis zu führen ist, der normenkonforme Ausfallbetrachtungen durchführt, wird sich im Bereich der IT-Sicherheit im Regelfall auf die Annahme verlassen, dass ein Ausfall implizit zum Versagen/Abschalten der Datenübertragung führt oder dass Ausfälle durch Anwender erkannt werden. Explizite Ausfallnachweise werden nicht geführt und die Argumentationen über verschiedene zusammenwirkende Komponenten und Systeme sind im Regelfall komplex und für Dritte nur mit hohem Aufwand durchblickbar.

Außerdem sind die Systeme technisch sehr aufwendig und haben einen größeren Leistungsumfang als für Fernabfragen im Regelfall erforderlich. Bei kommerziellen IT-Sicherheits- Komponenten sind aufgrund der Komplexität IT-Sicherheitslücken nicht auszuschließen, so dass üblicherweise Patches vorgesehen werden, um im Fall entdeckter IT-Sicherheitslücken die IT-Sicherheit gewährleisten zu müssen.

Mit der vorliegenden Erfindung werden die oben genannten technischen Aufgaben ohne die zuvor genannten Nachteile gelöst.

Hierzu ist erfindungsgemäß eine Befehlsübertragung vom ersten Schnittstellenmodul zum zweiten Schnittstellenmodul parallel.

Die Schnittstellenmodule umfassen erfindungsgemäß für die parallele Befehlsübertragung jeweils n Anschlüsse.

Zumindest der i-te Anschluss des zweiten Schnittstellenmoduls elektrisch nicht mit dem i-ten Anschluss des ersten Schnittstellenmoduls verbunden.

Dabei ist n eine natürliche Zahl. Zum Beispiel ist n zumindest 2. Bevorzugt ist n zumindest 4, beispielsweise genau 4 oder genau 8 oder genau 16. Die n Anschlüsse sind jeweils zur Verbindung mit einer Leitung eingerichtet. Eine Befehlsübertragung zwischen dem ersten Schnittstellenmodul und dem zweiten Schnittstellenmodul kann beispielweise auf n parallelen Leitungen erfolgen, die die n Anschlüsse beider Schnittstellenmodule miteinander verbinden.

Dabei ist i eine ganze Zahl kleiner gleich n. Das heißt, erfindungsgemäß ist zumindest ein Anschluss des zweiten Schnittstellenmoduls nicht mit dem standardmäßig zugehörigen Anschluss des ersten Schnittstellenmoduls verbunden. Zum Beispiel ist der i-te Anschluss des zweiten Schnittstellenmoduls über eine Leitung mit dem j-ten Anschluss des ersten Schnittstellenmoduls verbunden, wobei j eine ganze Zahl kleiner gleich n und ungleich i ist. Dazu sind zum Beispiel die Leitungen zwischen den beiden Schnittstellenmodulen überkreuzt. Möglich ist auch, dass zumindest eine Leitung ausgelassen oder unterbrochen ist, sodass der i-te Abschluss des zweiten Schnittstellenmoduls gar nicht an einen Anschluss des ersten Schnittstellenmoduls angeschlossen ist. Auch ist möglich, dass zumindest eine Leitung versetzt angeschlossen ist.

Durch die Maßnahme, dass der i-te Anschluss des zweiten Schnittstellenmoduls nicht mit dem i-ten Anschluss des ersten Schnittstellenmoduls verbunden ist, ist die Unveränderbarkeit der Software des zweiten Schnittstellenmoduls über die Eingangsschnittstelle realisiert. Außerdem können so die Befehle auch beim Versagen der Software nicht unverändert weitergeleitet werden. Zum Beispiel werden durch diese Maßnahme Sicherungsanhänge für sicherheitsrelevante Nachrichten ungültig, so dass eine Übertragung solcher nicht möglich ist.

Eine Manipulation seitens des Fernzugriffs ist insbesondere dadurch verhindert, dass die Software des zweiten Schnittstellenmoduls nicht über die Eingangsschnittstelle veränderbar ist und damit kein Durchgriff auf die sicherheitskritische Anlage möglich ist. Insbesondere durch den Protokollbruch im ersten Schnittstellenmodul gibt es nachweisbar keine technische Möglichkeit, Software über die Eingangsschnittstelle auf dem zweiten Schnittstellenmodul zu installieren. Dies gilt ganz besonders, wenn im ersten Schnittstellenmodul ein Protokollbruch auf ein nicht standardisiertes Protokoll erfolgt.

Das Einspeisen von unzulässigen Befehlen, wie sicherheitsrelevante Befehle, in die technische Anlage wird dadurch verhindert, dass das zweite Schnittstellenmodul nur ihm bekannte Teile eines Befehls weiterleitet. Zum Beispiel werden dann sicherheitsrelevante Teile eines Befehls nicht weitergeleitet. Selbst wenn dieser Sicherheitsmechanismus versagen sollte, sorgt zumindest der Protokollbruch dafür, dass der Filter nicht transparent für den Befehl ist.

Durch die Nicht-Umprogrammierbarkeit beziehungsweise Unveränderbarkeit der Software des zweiten Schnittstellenmoduls über die Eingangsschnittstelle wird zudem verhindert, dass das zweite Schnittstellenmodul so umprogrammiert wird, dass es selbst sicherheitsrelevante Befehle oder Befehlsteile erzeugt. Da sicherheitsrelevante Befehle nach dem aktuellen Stand der Technik zu sichern sind und dafür vergleichsweise komplexe Rechenoperationen erforderlich sind, die nicht durch Zufall erzeugt werden, können zufällige Ausfälle von Komponenten des Filters nicht dazu führen, dass sicherheitsrelevante Befehle oder Befehlsteile generiert werden können, sofern keine entsprechenden Algorithmen/Programmteile enthalten sind.

Gemäß zumindest einer Ausführungsform ist das erste Schnittstellenmodul ausschließlich dazu eingerichtet, den über die Eingangsschnittstelle empfangenen Befehl unter Protokollbruch an das zweite Schnittstellenmodul weiterzuleiten. Das heißt, die auf dem ersten Schnittstellenmodul gespeicherte Software ist nur zu den genannten Operationen eingerichtet und kann darüber hinaus keine weiteren Operationen durchführen. Insbesondere ist die Software des ersten Schnittstellenmoduls keine kommerzielle Software. Besonders bevorzugt ist die Software des ersten Schnittstellenmoduls keine Software Dritter, insbesondere keine COTS-Software (COTS = Commercial off-the-shelf) oder Closed-Software.

Dadurch kann die Software des ersten Schnittstellenmoduls besonders einfach gewählt werden, was in Bezug auf eine vollständige Nachvollziehbarkeit vorteilhaft ist. Insbesondere wenn keine unbekannte Software beziehungsweise keine kommerzielle Software verwendet wird, ist die Abwesenheit von IT-Sicherheitslücken nachweisbar beziehungsweise sind die Ausfallmöglichkeiten einfach nachvollziehbar. IT-Sicherheitslücken entstehen nämlich üblicherweise bei einer hohen Komplexität der verwendeten Software und sind meist auf Spezifikationsfehler, Programmierfehler oder Fehler in der Anwendung vorhandener Software zurückzuführen.

Besonders bevorzugt ist das erste Schnittstellenmodul nicht umprogrammierbar. Beispielsweise ist die Software des ersten Schnittstellenmoduls auf einem nicht beschreibbaren Speicher des ersten Schnittstellenmoduls abgespeichert.

Gemäß zumindest einer Ausführungsform ist die Software des zweiten Schnittstellenmoduls nicht veränderbar. Beispielsweise ist die Software des zweiten Schnittstellenmoduls auf einem nicht beschreibbaren beziehungsweise nicht veränderbaren Speicher des zweiten Schnittstellenmoduls abgespeichert. Alternativ ist eine Programmierschnittstelle des zweiten Schnittstellenmoduls zerstört oder unbrauchbar gemacht.

Gemäß zumindest einer Ausführungsform ist das zweite Schnittstellenmodul dazu eingerichtet, den von dem ersten Schnittstellenmodul kommenden Befehl umzukodieren. Durch das Umkodieren werden aus dem ursprünglichen Befehl Informationen entfernt oder hinzugefügt oder verändert. Zum Beispiel werden einzelne Bits des Befehls vertauscht oder ausgelassen. Dies ist insbesondere vorteilhaft, falls versucht wird, sicherheitsrelevante Befehle durch den Filter zu schicken.

Gemäß zumindest einer Ausführungsform ist das zweite Schnittstellenmodul ausschließlich dazu eingerichtet, die hier beschriebenen Operationen auszuführen. Insbesondere ist das zweite Schnittstellenmodul nur dazu eingerichtet, die ihm bekannten Teile eines Befehls weiterzuleiten, eventuell das Kommunikationsprotokoll des Befehls oder des Befehlsteils zu ändern und/oder den Befehl oder den Befehlsteil umzukodieren. Insbesondere ist die Software des zweiten Schnittstellenmoduls keine kommerzielle Software. Besonders bevorzugt ist die Software des zweiten Schnittstellenmoduls keine Software Dritter, insbesondere keine COTS-Software (COTS = Commercial off-the-shelf). Dadurch kann die Software besonders einfach gewählt werden, was in Bezug auf eine vollständige Nachvollziehbarkeit vorteilhaft ist.

Gemäß zumindest einer Ausführungsform ist das erste Schnittstellenmodul ein Mikrocontroller oder ein FPGA (Field Programmable Gate Array). Alternativ oder zusätzlich ist auch das zweite Schnittstellenmodul ein Mikrocontroller oder ein FPGA.

Gemäß zumindest einer Ausführungsform ist die Ausgangsschnittstelle zur Ausgabe eines Befehls auf Basis des ersten Protokolls eingerichtet. In dem zweiten Schnittstellenmodul findet bevorzugt wieder ein Protokollbruch auf das erste Protokoll statt. Alternativ ist es auch denkbar, dass in dem zweiten Schnittstellenmodul ein Protokollbruch auf ein von dem ersten Protokoll verschiedenes drittes Protokoll stattfindet und die Ausgangsschnittstelle zur Ausgabe eines Befehls auf Basis dieses dritten Protokolls eingerichtet ist.

Gemäß zumindest einer Ausführungsform ist die Eingangsschnittstelle eine serielle Schnittstelle ist. Die Ausgangsschnittstelle ist beispielsweise zur Ausgabe eines seriellen Befehls eingerichtet. Die Befehlsübertragung zwischen dem ersten Schnittstellenmodul und dem zweiten Schnittstellenmodul ist parallel.

Darüber hinaus wird eine Anordnung angegeben. Die Anordnung umfasst einen hier beschriebenen Filter. Ferner umfasst die Anordnung eine technische Anlage, insbesondere eine sicherheitskritische, technische Anlage. Die Eingangsschnittstelle ist zur signaltechnischen Verbindung mit einer Fernabfrageeinheit eingerichtet. Die Ausgangsschnittstelle ist signaltechnisch mit der technischen Anlage verbunden.

Gemäß zumindest einer Ausführungsform handelt es sich bei der technischen Anlage um eine Schienenverkehrsanlage beziehungsweise um eine Steuervorrichtung für eine Schienenverkehrsanlage. Insbesondere ist die Schienenverkehrsanlage eine Eisenbahnanlage. Zum Beispiel handelt es sich bei der technischen Anlage um einen Stellwerksrechner eines Eisenbahnstellwerks oder um einen Leitstellenrechner einer Eisenbahnleitstelle.

Darüber hinaus wird ein Verfahren zum Betreiben einer Anordnung angegeben. Das Verfahren ist dazu eingerichtet, eine hier beschriebene Anordnung zu betreiben. Alle im Zusammenhang mit der Anordnung offenbarten Merkmale sind daher auch für das Verfahren offenbart und umgekehrt.

Das Verfahren umfasst die folgenden Schritte:
- Signaltechnisches Verbinden einer Fernabfrageeinheit mit der Eingangsschnittstelle der Anordnung,
- Senden eines Befehls auf Basis eines ersten Protokolls von der Fernabfrageeinheit an die Eingangsschnittstelle und von dort an das erste Schnittstellenmodul,
- Weiterleiten des Befehls unter Protokollbruch von dem ersten Schnittstellenmodul an das zweite Schnittstellenmodul,
- Weiterleiten nur solcher Teile des Befehls von dem zweiten Schnittstellenmodul zur Ausgangsschnittstelle, die in dem zweiten Schnittstellenmodul gespeichert sind,
- Weiterleiten der Teile des Befehls von der Ausgangsschnittstelle zur technischen Anlage.

Dabei erfolgt eine Befehlsübertragung vom ersten Schnittstellenmodul zum zweiten Schnittstellenmodul parallel, wobei
- die Schnittstellenmodule für die parallele Befehlsübertragung jeweils n Anschlüsse umfassen und
- zumindest ein Anschluss des zweiten Schnittstellenmoduls nicht mit dem standardmäßig zugehörigen Anschluss des ersten Schnittstellenmoduls verbunden ist.

Bei der Fernabfrageeinheit handelt es sich beispielsweise um einen Computer, insbesondere einen Laptop, oder um ein Smartphone oder um einen Tablet-PC. Die signaltechnische Verbindung zwischen der Fernabfrageeinheit und dem Filter wird beispielweise über eine kabellose oder kabelgebundene Internetverbindung hergestellt.

Während des Verfahrens ist die Fernabfrageeinheit beispielsweise einer anderen Sicherheitszone zugeordnet als die technische Anlage und der Filter. Der Filter und die technische Anlage sind bevorzugt derselben Sicherheitszone zugeordnet. Zum Beispiel ist die Fernabfrageeinheit einem Kategorie 3 Netzwerk nach EN 50159 zugeordnet, während die technische Anlage, und bevorzugt auch der Filter, einem Kategorie 2 Netzwerk nach EN 50159 zugeordnet sind.

Umfassen das erste und/oder zweite Schnittstellenmodul eine Programmierschnittstelle zur Umprogrammierung der jeweiligen darauf laufenden Software, so sind die Programmierschnittstellen bevorzugt ausschließlich aus der dem Filter zugeordneten Sicherheitszone zugänglich.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert. Gleiche, gleichartige oder gleich wirkende Elemente sind in den Figuren mit den gleichen Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder für eine bessere Verständlichkeit übertrieben groß dargestellt sein.

Es zeigen:
- Figuren 1, 2 und 8: verschiedene Ausführungsbeispiele des Filters,
- Figur 3: ein Ausführungsbeispiel der Anordnung,
- Figuren 4 bis 7: verschiedene Positionen in Ausführungsbeispielen zum Betreiben einer Anordnung.

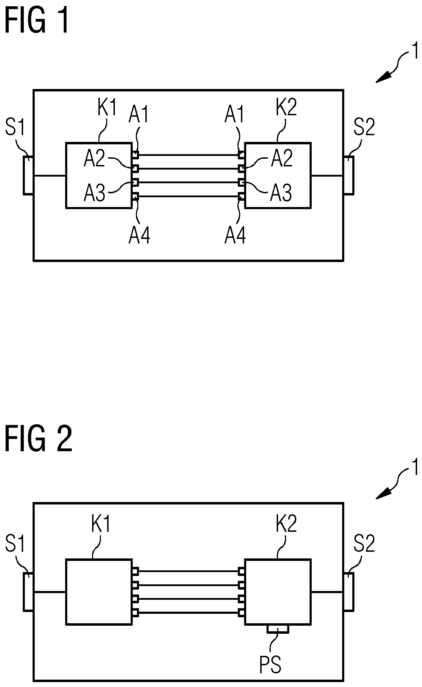

Figur 1 zeigt ein erstes Ausführungsbeispiel eines Filters 1. Der Filter 1 umfasst eine Eingangsschnittstelle S1 zum Empfang eines Befehls auf Basis eines ersten Protokolls. Bei der Eingangsschnittstelle S1 handelt es sich beispielsweise um eine serielle USB- oder Ethernet-Schnittstelle. Weiter umfasst der Filter 1 eine Ausgangsschnittstelle S2 zur Ausgabe eines Befehls. Beispielsweise ist die Ausgangsschnittstelle S2 zur Ausgabe eines Befehls auf Basis desselben ersten Protokolls wie die Eingangsschnittstelle S1 eingerichtet. Insbesondere handelt es sich bei der Ausgangsschnittstelle S2 zum Beispiel um eine serielle USB- oder Ethernet-Schnittstelle.

Der Filter 1 umfasst ferner ein erstes Schnittstellenmodul K1 und ein zweites Schnittstellenmodul K2. Bei den Schnittstellenmodul K1, K2 handelt es sich beispielsweise um Mikrocontroller oder FPGAs. Das erste Schnittstellenmodul K1 ist signaltechnisch mit der Eingangsschnittstelle S1 und dem zweiten Schnittstellenmodul K2 verbunden. Das zweite Schnittstellenmodul K2 ist signaltechnisch mit dem ersten Schnittstellenmodul K1 und der Ausgangsschnittstelle S2 verbunden. Das erste Schnittstellenmodul K1 ist beispielsweise ausschließlich dazu eingerichtet, einen von der Eingangsschnittstelle S1 empfangenen Befehl unter Protokollbruch an das zweite Schnittstellenmodul K2 weiterzuleiten. Die Befehlsübertragung von dem ersten Schnittstellenmodul K1 auf das zweite Schnittstellenmodul K2 ist vorliegend parallel. Das zweite Schnittstellenmodul K2 ist beispielsweise ausschließlich dazu eingerichtet, solche Teile des von dem ersten Schnittstellenmodul K1 kommenden Befehls unter erneutem Protokollbruch weiterzuleiten, die in dem zweiten Schnittstellenmodul K2, beispielsweise in einem internen Speicher des zweiten Schnittstellenmoduls K2, abgespeichert sind.

In der Figur 1 weisen das erste und das zweite Schnittstellenmodul für die parallele Befehlsübertragung jeweils vier Anschlüsse A1, A2, A3, A4 auf. Dabei ist jeder Anschluss Ai des zweiten Schnittstellenmoduls K1 mit dem standardmäßig zugehörigen Anschluss Ai des ersten Schnittstellenmoduls K1 über eine Leitung elektrisch verbunden. Das heißt, die ersten Anschlüsse A1 sind miteinander verbunden, die zweiten Anschlüsse A2 sind miteinander verbunden, die dritten Anschlüsse A3 sind miteinander verbunden und die vierten Anschlüsse A4 sind miteinander verbunden.

In dem ersten Ausführungsbeispiel der Figur 1 sind das erste Schnittstellenmodul K1 und das zweite Schnittstellenmodul K2 nicht umprogrammierbar. Das heißt, die Software auf dem ersten Schnittstellenmodul K1 und auf dem zweiten Schnittstellenmodul K2 kann nicht verändert oder umprogrammiert werden.

In der Figur 2 ist ein zweites Ausführungsbeispiel des Filters 1 dargestellt. Anders als in der Figur 1 umfasst das zweite Schnittstellenmodul K2 nun eine Programmierschnittstelle PS, über die das zweite Schnittstellenmodul K2 umprogrammierbar ist. Die Programmierschnittstelle PS ist jedoch weder mit der Eingangsschnittstelle S1 noch mit dem ersten Schnittstellenmodul K1 signaltechnisch verbunden, so dass eine Umprogrammierung des zweiten Schnittstellenmoduls K2 über die Eingangsschnittstelle S1 nicht möglich ist.

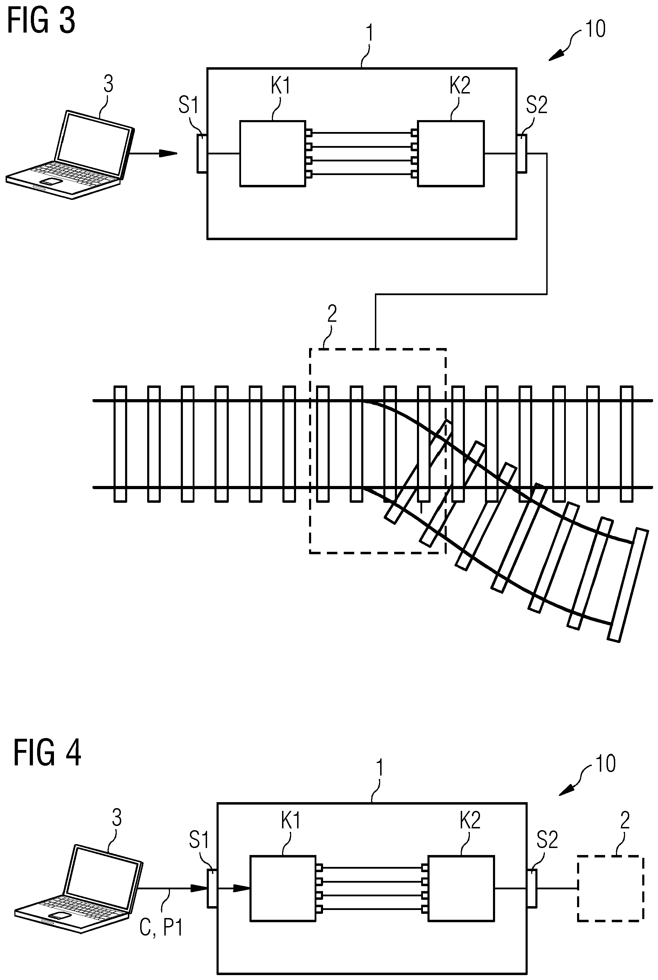

In der Figur 3 ist ein Ausführungsbeispiel einer Anordnung 10 gezeigt. Die Anordnung 10 umfasst beispielsweise den Filter 1 aus der Figur 1 sowie eine sicherheitskritische, technische Anlage 2. Bei der sicherheitskritischen, technischen Anlage 2 handelt es sich vorliegend um das Stellwerk einer Eisenbahnanlage. Die Ausgangsschnittstelle S2 des Filters 1 ist signaltechnisch mit der technischen Anlage 2 verbunden. Die Eingangsschnittstelle S1 des Filters 1 ist signaltechnisch mit einer Fernabfrageeinheit 3, vorliegend in Form eines Laptops, verbindbar.

In der Figur 4 ist eine Position in einem Verfahren zum Betreiben einer Anordnung, beispielsweise der Anordnung 10 aus der Figur 3, gezeigt. Zur besseren Darstellbarkeit ist die sicherheitskritische, technische Anlage 2 nun vereinfacht als gestricheltes Kästchen dargestellt. In der Position der Figur 4 ist die Fernabfrageeinheit 3 signaltechnisch mit der Eingangsschnittstelle S1 verbunden und sendet einen Befehl C auf Basis eines ersten Protokolls P1 an die Eingangsschnittstelle S1. Der Befehl C wird an das erste Schnittstellenmodul K1 weitergeleitet. Die Befehlsübertragung von der Fernabfrageeinheit 3 zu der Eingangsschnittstelle S1 ist vorliegend seriell.

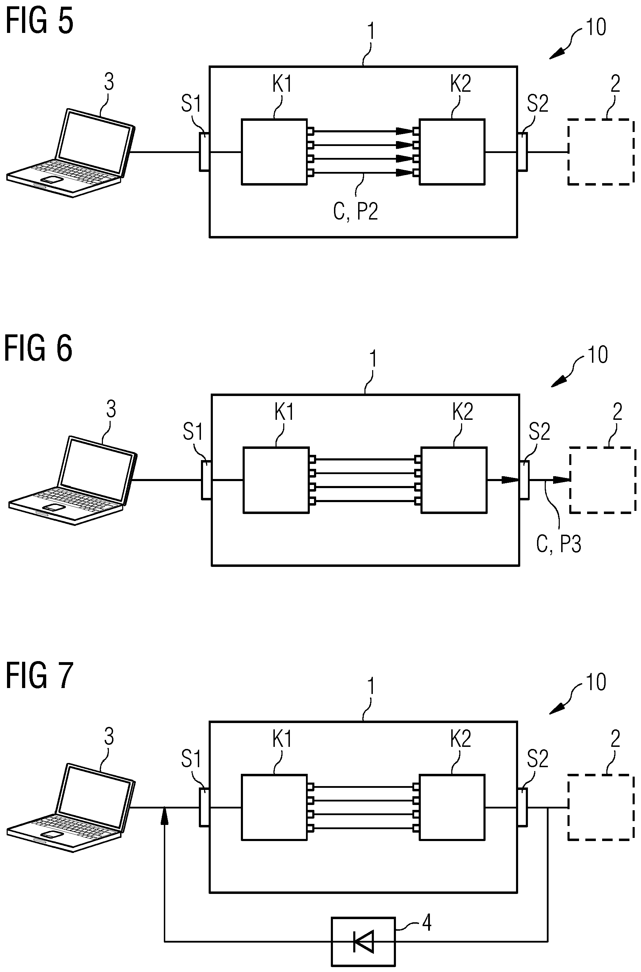

In der Figur 5 ist eine darauffolgende Position des Verfahrens gezeigt, bei dem der Befehl C unter Protokollbruch von dem ersten Schnittstellenmodul K1 an das zweite Schnittstellenmodul K2 weitergeleitet wird. Dabei nimmt das erste Schnittstellenmodul K1 einen Protokollbruch von dem ersten Protokoll P1 auf ein zweites Protokoll P2 vor. Die Befehlsweiterleitung von dem ersten Schnittstellenmodul K1 zu dem zweiten Schnittstellenmodul K2 ist hier parallel.

In der Figur 6 ist eine weitere Position des Verfahrens gezeigt. Das zweite Schnittstellenmodul K2 hat die ihm bekannten Teile des Befehls C an die Ausgangsschnittstelle S2 weitergeleitet, von wo aus diese zu der sicherheitskritischen Anlage 2 weitergeleitet werden. Vorliegend hat das zweite Schnittstellenmodul K2 dabei wieder einen Protokollbruch von dem zweiten Protokoll P2 auf ein drittes Protokoll P3 vorgenommen. Das dritte Protokoll P3 kann identisch zu dem ersten Protokoll P1 sein.

In der Figur 7 ist eine weitere Position in dem Verfahren gezeigt, bei dem die Anordnung 10 weiter eine Datendiode 4 umfasst, die parallel zu dem Filter 1 geschaltet ist. Die Datendiode 4 ermöglicht eine unidirektionale Datenübertragung von der technischen Anlage 2 zur Fernabfrageeinheit 3. Dabei blockiert die Datendiode 4 bevorzugt jegliche Übertragung von Daten in umgekehrte Richtung, also von der Fernabfrageeinheit 3 in Richtung zur technischen Anlage 2.

Wird über den Filter 1 ein zulässiger Befehl an die technische Anlage 2 übermittelt, so können anschließend über die Datendiode 4 angefragte Daten an die Fernabfrageeinheit 3 übermittelt werden.

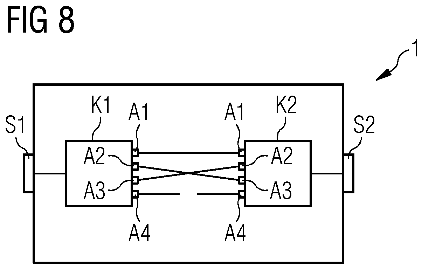

Figur 8 zeigt ein drittes Ausführungsbeispiel des Filters 1. Das Ausführungsbeispiel ähnelt dem der Figur 1, nur sind nun die Anschlüsse A des zweiten Schnittstellenmoduls nun nicht mehr alle mit den standardmäßig zughörigen Anschlüssen A des ersten Schnittstellenmoduls K1 verbunden. Vorliegend ist der vierte Anschluss A4 des zweiten Schnittstellenmoduls K2 gar nicht mit einem Anschluss A des ersten Schnittstellenmoduls K1 verbunden. Der zweite Anschluss A2 des zweiten Schnittstellenmoduls K2 ist nicht, wie es standardmäßig der Fall wäre, mit dem zweiten Anschluss A2 des ersten Schnittstellenmoduls K1 verbunden, sondern mit dem dritte Anschluss A3. Dafür ist der dritte Anschluss A3 des zweiten Schnittstellenmoduls K2 mit dem zweiten Anschluss A2 des ersten Schnittstellenmoduls K1 verbunden. Insofern sind die elektrischen Leitungen dieser beiden Anschlusspaare überkreuzt.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: Filter
- 2: technische Anlage
- 3: Fernabfrageeinheit
- 4: Datendiode
- S1: Eingangsschnittstelle
- S2: Ausgangsschnittstelle
- K1: erstes Schnittstellenmodul
- K2: zweites Schnittstellenmodul
- P1: erstes Protokoll
- P2: zweites Protokoll
- P3: drittes Protokoll
- PS: Programmierschnittstelle
- C: Befehl
- A1...n: Anschluss

## Patentansprüche

1. Filter (1), umfassend:
- eine Eingangsschnittstelle (S1) zum Empfangen eines Befehls auf Basis eines ersten Protokolls (P1),
- eine Ausgangsschnittstelle (S2) zur Ausgabe eines Befehls,
- ein erstes Schnittstellenmodul (K1),
- ein zweites Schnittstellenmodul (K2), wobei
- das erste Schnittstellenmodul (K1) signaltechnisch mit der Eingangsschnittstelle (S1) und dem zweiten Schnittstellenmodul (K2) verbunden ist,
- das zweite Schnittstellenmodul (K2) signaltechnisch mit der Ausgangsschnittstelle (S2) und dem ersten Schnittstellenmodul (K1) verbunden ist,
- das erste Schnittstellenmodul (K1) dazu eingerichtet ist, den über die Eingangsschnittstelle (S1) empfangenen Befehl unter Protokollbruch an das zweite Schnittstellenmodul (K2) weiterzuleiten,
- das zweite Schnittstellenmodul (K2) dazu eingerichtet ist, nur solche Teile des von dem ersten Schnittstellenmodul (K1) kommenden Befehls an die Ausgangsschnittstelle (S2) weiterzuleiten, die in dem zweiten Schnittstellenmodul (K2) gespeichert sind,
- eine Software des zweiten Schnittstellenmoduls (S2) über die Eingangsschnittstelle (S1) nicht veränderbar ist,
**dad urchgekennzeichnet, dass**
eine Befehlsübertragung vom ersten Schnittstellenmodul (K1) zum zweiten Schnittstellenmodul (K2) parallel ist, wobei
- die Schnittstellenmodule (K1, K2) für die parallele Befehlsübertragung jeweils n Anschlüsse (A1..n) umfassen,
- zumindest ein Anschluss (Ai) des zweiten Schnittstellenmoduls (K2) nicht mit dem standardmäßig zugehörigen Anschluss (Ai) des ersten Schnittstellenmoduls (K1) verbunden ist.

2. Filter (1) nach Anspruch 1,
wobei das erste Schnittstellenmodul (K1) ausschließlich dazu eingerichtet ist, den über die Eingangsschnittstelle (S1) empfangenen Befehl unter Protokollbruch an das zweite Schnittstellenmodul (K2) weiterzuleiten.

3. Filter (1) nach Anspruch 1 oder 2,
wobei die Software des zweiten Schnittstellenmoduls (K2) unveränderbar ist.

4. Filter (1) nach einem der vorhergehenden Ansprüche,
wobei das zweite Schnittstellenmodul (K2) dazu eingerichtet ist, den von dem ersten Schnittstellenmodul (K1) kommenden Befehl umzukodieren.

5. Filter (1) nach einem der vorhergehenden Ansprüche,
wobei das zweite Schnittstellenmodul (K2) ausschließlich dazu eingerichtet ist, die in den vorhergehenden Ansprüchen angegebenen Operationen auszuführen.

6. Filter (1) nach einem der vorhergehenden Ansprüche,
wobei das erste (K1) und das zweite (K2) Schnittstellenmodul jeweils ein Mikrocontroller oder ein FPGA ist.

7. Filter (1) nach einem der vorhergehenden Ansprüche,
wobei die Ausgangsschnittstelle (S2) zur Ausgabe eines Befehls auf Basis des ersten Protokolls (P1) eingerichtet ist.

8. Filter (1) nach einem der vorhergehenden Ansprüche,
wobei die Eingangsschnittstelle (S1) eine serielle Schnittstelle ist.

9. Anordnung (10) mit
- einer technischen Anlage (2),
- einem Filter (1) gemäß einem der vorhergehenden Ansprüche, wobei
- die Eingangsschnittstelle (S1) zur signaltechnischen Verbindung mit einer Fernabfrageeinheit (3) eingerichtet ist,
- die Ausgangsschnittstelle (S2) signaltechnisch mit der technischen Anlage (2) verbunden ist.

10. Anordnung (10) nach Anspruch 9,
wobei die technische Anlage (2) eine Schienenverkehrsanlage ist.

11. Verfahren zum Betreiben einer Anordnung (10) nach Anspruch 9 oder 10, umfassend die Schritte:
- signaltechnisches Verbinden einer Fernabfrageeinheit (3) mit der Eingangsschnittstelle (S1) der Anordnung (10),
- Senden eines Befehls (C) auf Basis eines ersten Protokolls (P1) von der Fernabfrageeinheit (3) an die Eingangsschnittstelle (S1) und von dort an das erste Schnittstellenmodul (K1),
- Weiterleiten des Befehls (C) unter Protokollbruch von dem ersten Schnittstellenmodul (K1) an das zweite Schnittstellenmodul (K2),
- Weiterleiten nur solcher Teile des Befehls (C) von dem zweiten Schnittstellenmodul (K2) zur Ausgangsschnittstelle (S2), die in dem zweiten Schnittstellenmodul (K2) gespeichert sind,
- Weiterleiten der Teile des Befehls (C) von der Ausgangsschnittstelle (S2) zur technischen Anlage (2).
**dad urchgekennzeichnet, dass**
eine Befehlsübertragung vom ersten Schnittstellenmodul (K1) zum zweiten Schnittstellenmodul (K2) parallel erfolgt, wobei
- die Schnittstellenmodule (K1, K2) für die parallele Befehlsübertragung jeweils n Anschlüsse (A1..n) umfassen,
- zumindest ein Anschluss (Ai) des zweiten Schnittstellenmoduls (K2) nicht mit dem standardmäßig zugehörigen Anschluss (Ai) des ersten Schnittstellenmoduls (K1) verbunden ist.

## Claims

1. Filter (1), comprising:
- an input interface (S1) for receiving a command on the basis of a first protocol (P1),
- an output interface (S2) for outputting a command,
- a first interface module (K1),
- a second interface module (K2), wherein
- the first interface module (K1) is connected to the input interface (S1) and the second interface module (K2) for signalling purposes,
- the second interface module (K2) is connected to the output interface (S2) and the first interface module (K1) for signalling purposes,
- the first interface module (K1) is configured to forward the command received via the input interface (S1) to the second interface module (K2) with a break in protocol,
- the second interface module (K2) is configured to only forward those parts of the command coming from the first interface module (K1), which are stored in the second interface module (K2), to the output interface (S2),
- a piece of software of the second interface module (S2) cannot be modified via the input interface (S1),
**characterised in that**
a command transfer from the first interface module (K1) to the second interface module (K2) is parallel, wherein
- the interface modules (K1, K2) each comprise n connections (A1..n) for the parallel command transfer,
- at least one connection (Ai) of the second interface module (K2) is not connected to the connection (Ai) of the first interface module (K1) which is associated by default.

2. Filter (1) according to claim 1,
wherein the first interface module (K1) is exclusively configured to forward the command received via the input interface (S1) to the second interface module (K2) with a break in protocol.

3. Filter (1) according to claim 1 or 2,
wherein the software of the second interface module (K2) cannot be modified.

4. Filter (1) according to one of the preceding claims,
wherein the second interface module (K2) is configured to recode the command coming from the first interface module (K1).

5. Filter (1) according to one of the preceding claims,
wherein the second interface module (K2) is exclusively configured to carry out the operations specified in the preceding claims.

6. Filter (1) according to one of the preceding claims,
wherein the first (K1) and the second (K2) interface module are a microcontroller or an FPGA in each case.

7. Filter (1) according to one of the preceding claims,
wherein the output interface (S2) is configured to output a command on the basis of the first protocol (P1).

8. Filter (1) according to one of the preceding claims,
wherein the input interface (S1) is a serial interface.

9. Arrangement (10) with
- a technical installation (2),
- a filter (1) according to one of the preceding claims,
wherein
- the input interface (S1) is configured to connect to a remote query unit (3) for signalling purposes,
- the output interface (S2) is connected to the technical installation (2) for signalling purposes.

10. Arrangement (10) according to claim 9,
wherein the technical installation (2) is a rail traffic installation.

11. Method for operating an arrangement (10) according to claim 9 or 10, comprising the steps:
- connecting a remote query unit (3) to the input interface (S1) of the arrangement (10) for signalling purposes,
- sending a command (C) on the basis of a first protocol (P1) from the remote query unit (3) to the input interface (S1), and from there to the first interface module (K1),
- forwarding the command (C) from the first interface module (K1) to the second interface module (K2) with a break in protocol,
- forwarding only those parts of the command (C), which are stored in the second interface module (K2), from the second interface module (K2) to the output interface (S2),
- forwarding the parts of the command (C) from the output interface (S2) to the technical installation (2),
**characterised in that**
a command transfer from the first interface module (K1) to the second interface module (K2) takes place in parallel, wherein
- the interface modules (K1, K2) each comprise n connections (A1..n) for the parallel command transfer,
- at least one connection (Ai) of the second interface module (K2) is not connected to the connection (Ai) of the first interface module (K1) which is associated by default.

## Revendications

1. Filtre (1), comprenant :
- une interface (S1) d'entrée pour la réception d'une instruction sur la base d'un premier protocole (P1),
- une interface (S2) de sortie pour l'émission d'une instruction,
- un premier module (K1) d'interface,
- un deuxième module (K2) d'interface, dans lequel
- le premier module (K1) d'interface est relié en technique du signal à l'interface (S1) d'entrée et au deuxième module (K2) d'interface,
- le deuxième module (K2) d'interface est relié en technique du signal à l'interface (S2) de sortie et au premier module (K1) d'interface,
- le premier module (K1) d'interface est agencé pour acheminer au deuxième module (K2) d'interface, avec rupture du protocole, l'instruction reçue en passant l'interface (S1) d'entrée,
- le deuxième module (K2) d'interface est agencé pour acheminer à l'interface (S2) de sortie seulement les parties de l'instruction arrivant du premier module (K1) d'interface, qui sont mises en mémoire dans le deuxième module (K2) d'interface,
- un logiciel du deuxième module (S2) d'interface ne peut pas être modifié en passant par l'interface (S1) d'entrée,
**caractérisé en ce que**
une transmission d'instructions du premier module (K1) d'interface au deuxième module (K2) d'interface est en parallèle, dans lequel
- les modules (K1, K2) d'interface pour la transmission en parallèle d'instructions comprennent chacun n connexions (A1..n),
- au moins une connexion (Ai) du deuxième module (K2) d'interface n'est pas reliée à la connexion (Ai), lui appartenant suivant la norme, du premier module (K1) d'interface.

2. Filtre (1) suivant la revendication 1,
dans lequel le premier module (K1) d'interface est agencé exclusivement pour acheminer au deuxième module (K2) d'interface, avec rupture du protocole, l'instruction reçue en passant l'interface (S1) d'entrée.

3. Filtre (1) suivant la revendication 1 ou 2,
dans lequel le logiciel du deuxième module (K2) d'interface n'est pas modifiable.

4. Filtre (1) suivant l'une des revendications précédentes,
dans lequel le deuxième module (K2) d'interface est agencé pour coder l'instruction venant du premier module (K1) d'interface.

5. Filtre (1) suivant l'une des revendications précédentes,
dans lequel le deuxième module (K2) d'interface est agencé pour exécuter exclusivement les opérations indiquées dans les revendications précédentes.

6. Filtre (1) suivant l'une des revendications précédentes,
dans lequel le premier (K1) et le deuxième (K2) modules d'interface sont respectivement une micro-unité de commande ou un FPGA.

7. Filtre (1) suivant l'une des revendications précédentes,
dans lequel l'interface (S2) de sortie est agencé pour l'émission d'une instruction sur la base du premier protocole (P1).

8. Filtre (1) suivant l'une des revendications précédentes,
dans lequel l'interface (S1) d'entrée est une interface série.

9. Agencement (10) comprenant
- une installation (2) technique,
- un filtre (1) suivant l'une des revendications précédentes, dans lequel
- l'interface (S1) d'entrée est agencée pour la liaison en technique du signal avec une unité (3) de télé-interrogation,
- l'interface (S2) de sortie est reliée en technique du signal à l'installation (2) technique.

10. Agencement (10) suivant la revendication 9,
dans lequel l'installation (2) technique est une installation de chemin de fer.

11. Procédé pour faire fonctionner un agencement (10) suivant la revendication 9 ou 10, comprenant les stades :
- liaison en technique du signal d'une unité (3) de télé-interrogation à l'interface (S1) d'entrée de l'agencement (10),
- envoi d'une instruction (C) sur la base d'un premier protocole (P1) de l'unité (3) de télé-interrogation à l'interface (S1) d'entrée et de là, au premier module (K1) d'interface,
- acheminement de l'instruction (C), avec rupture du protocole, du premier module (K1) d'interface au deuxième module (K2) d'interface,
- acheminement de seulement les parties de l'instruction (C) du deuxième module (K2) d'interface à l'interface (S2) de sortie, qui sont mises en mémoire dans le deuxième module (K2) d'interface,
- acheminement des parties de l'instruction (C) de l'interface (S2) de sortie à l'installation (2) technique,
**caractérisé en ce qu'**
une transmission d'instructions du premier module (K1) d'interface au deuxième module (K2) d'interface s'effectue en parallèle, dans lequel
- les modules (K1, K2) d'interface pour la transmission en parallèle d'instructions comprennent chacun n connexions (A1..n),
- au moins une connexion (Ai) du deuxième module (K2) d'interface n'est pas reliée à la connexion (Ai), lui appartenant suivant la norme, du premier module (K1) d'interface.
